# EUROPEAN PATENT APPLICATION

(11) **EP 4 636 936 A1**
(43) Date of publication of application: **22.10.2025**
(21) Application number: 23903196.6
(22) Date of filing: 16.11.2023
(51) Int. Cl.: H01M 50/528, H01G 11/68, H01G 11/70, H01M 50/533, H01M 50/534, H01M 50/536, H01M 50/538

(54) **POWER STORAGE DEVICE AND METHOD FOR PRODUCING POWER STORAGE DEVICE**

(30) Priority: 12.12.2022 JP 2022197849
(71) Applicant: Panasonic Energy Co., Ltd., Osaka 570-8511 (JP)
(72) Inventor: KUMAZAWA, Seiji, Kadoma-shi, Osaka 571-0057 (JP); HIROSE, Takayuki, Kadoma-shi, Osaka 571-0057 (JP); TSUJI, Yuta, Kadoma-shi, Osaka 571-0057 (JP); YAGI, Haruhisa, Kadoma-shi, Osaka 571-0057 (JP)
(74) Representative: Novagraaf International SA
(86) International application number: PCT/JP2023/041187
(87) International publication number: WO 2024/127898

(57) **Abstract**

A power storage apparatus (1) includes: an electrode group (2) including a current collector (12) in which an electrode active material layer (14) is stacked; and a current collector plate (20, 22) joined to the current collector (12). The electrode group (2) has a structure in which a plurality of exposed portions (12a) of the current collector (12) that are not coated with the electrode active material layer (14) are arranged, and the plurality of exposed portions (12a) arranged are joined to the current collector plate (20, 22). At least some of the exposed portions (12a) have a metal foreign matter (50) adhering to a surface. The metal foreign matter (50) has the maximum width in a bottom portion (50a) in contact with the exposed portion (12a), and a width (W) of a tip portion (50b) is smaller than a width (W) of the bottom portion (50a).

## Description

### TECHNICAL FIELD

The present invention relates to a power storage apparatus and a method of manufacturing a power storage apparatus.

### BACKGROUND ART

In the related art, a power storage apparatus in which an electrode group is housed in an outer can is known. In a power storage apparatus like this, a current collector plate is welded to the end of the electrode group (see, for example, Patent Literature 1).

### RELATED-ART LITERATURE

### PATENT LITERATURE

PATENT LITERATURE 1: JP2015-106613

### SUMMARY OF INVENTION

### TECHNICAL PROBLEM

We have made an extensive study on power storage apparatuses in which an electrode group and a current collector plate are joined and have found that there is room for improvement in the quality of conventional power storage apparatuses.

The present disclosure addresses the issue described above, and a purpose thereof is to provide a technology of improving the quality of power storage apparatuses.

### SOLUTION TO PROBLEM

An embodiment of the present disclosure relates to a power storage apparatus. The power storage apparatus includes: an electrode group including a current collector in which an electrode active material layer is stacked; and a current collector plate joined to the current collector. The electrode group has a structure in which a plurality of exposed portions of the current collector that are not coated with the electrode active material layer are arranged, and the plurality of exposed portions arranged are joined to the current collector plate. At least some of the exposed portions have a metal foreign matter adhering to a surface. The metal foreign matter has the maximum width in a bottom portion in contact with the exposed portion, and a width of a tip portion is smaller than a width of the bottom portion.

Another embodiment of the present disclosure relates to a method of manufacturing a power storage apparatus. The method of manufacturing includes: preparing an electrode group including a current collector in which an electrode active material layer is stacked, the electrode group having a structure in which a plurality of exposed portions of the current collector that are not coated with the electrode active material layer are arranged; bringing the plurality of exposed portions arranged into contact with a current collector plate; and joining each exposed portion to the current collector plate by heat conduction welding.

Optional combinations of the aforementioned constituting elements, and implementations of the present disclosure in the form of methods, apparatuses, and systems may also be practiced as additional modes of the present disclosure.

### ADVANTAGEOUS EFFECTS OF INVENTION

According to the present disclosure, the quality of a power storage apparatus can be improved.

### BRIEF DESCRIPTION OF DRAWINGS

[Fig. 1] Fig. 1 is a cross-sectional view of a power storage apparatus according to the embodiment.
[Fig. 2] Fig. 2A is an exploded perspective view of an electrode group. Fig. 2B is a plan view of the electrode group to which a first current collector plate is joined.
[Fig. 3] Fig. 3A is a side view of the end of the current collector and the current collector plate. Fig. 3B is a perspective view of the end of the current collector.
[Fig. 4] Figs. 4A-4C show the steps of joining the current collector and the current collector plate.

### DESCRIPTION OF EMBODIMENTS

Hereinafter, the present disclosure will be described based on a preferred embodiment with reference to the accompanying drawings. The embodiment is not intended to limit the scope of the present disclosure but exemplify the present disclosure. Not all of the features and the combinations thereof described in the embodiment are necessarily essential to the present disclosure. Identical or like constituting elements, members, processes shown in the drawings are represented by identical symbols and a duplicate description will be omitted as appropriate. The scales and shapes of the parts shown in the figures are defined for convenience's sake to make the explanation easy and shall not be interpreted limitatively unless otherwise specified. Terms like "first", "second", etc. used in the specification and claims do not indicate an order or importance by any means unless specified otherwise and are used to distinguish a certain feature from the others. Those of the members that are not material to the description of the embodiments are omitted in the drawings.

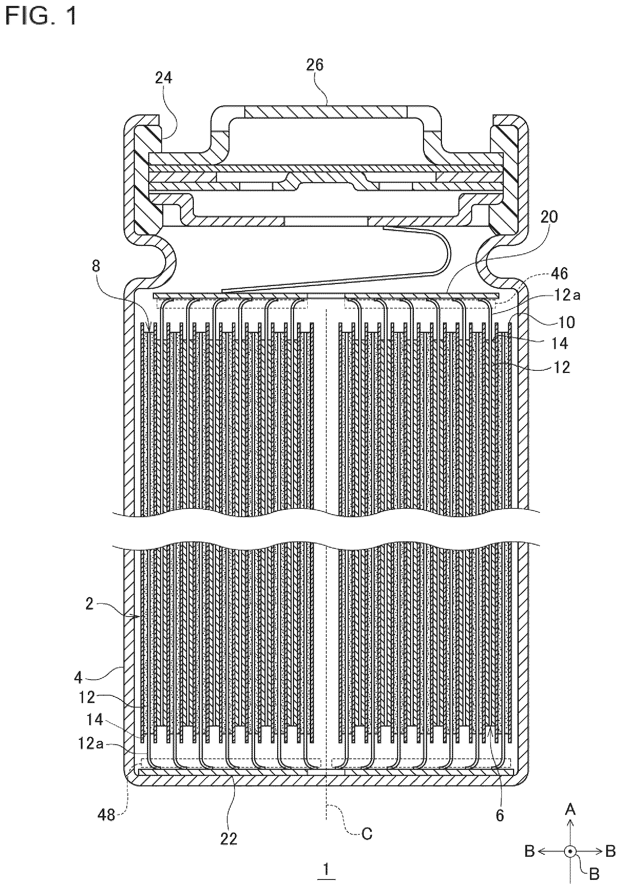

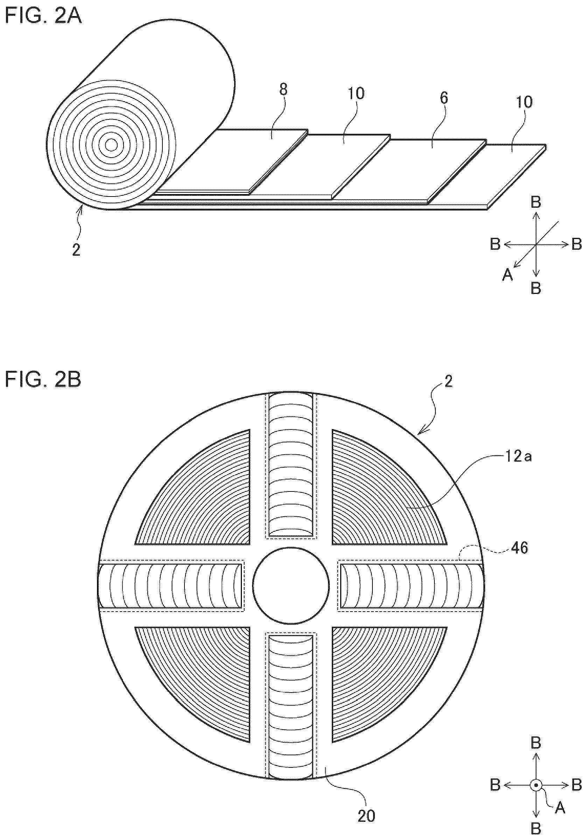

Fig. 1 is a cross-sectional view of a power storage apparatus 1 according to the embodiment. Fig. 2A is an exploded perspective view of an electrode group 2. Fig. 2B is a plan view of the electrode group 2 to which a first current collector plate 20 is joined. In Fig. 2A, the illustration of a current collector 12 and an electrode active material layer 14 in distinction from one another is omitted.

The power storage apparatus 1 is a rechargeable secondary battery exemplified by a lithium ion battery, a nickel hydride battery, a nickel-cadmium battery, etc. or a capacitor like an electric double layer capacitor. The power storage apparatus 1 has a structure in which the electrode group 2 is stored in an outer can 4 along with an electrolytic solution (not shown) and the first current collector plate 20 and a second current collector plate 22. The electrode group 2 is cylindrical in shape by way of one example and has a winding structure in which a belt-like first electrode plate 6 and a belt-like second electrode plate 8 are stacked, sandwiching a belt-like separator 10, and are wound in a spiral shape. In the embodiment, the first electrode plate 6 is the positive electrode plate and the second electrode plate 8 is the negative electrode plate. The first electrode plate 6 may be the negative electrode plate, and the second electrode plate 8 may be the positive electrode plate. The separator 10 is formed by a microporous film made of, by way of one example, a polypropylene resin or the like.

The first electrode plate 6 and the second electrode plate 8 include the current collector 12 and an electrode active material layer 14 stacked on the current collector 12. In the case of a general lithium ion secondary battery, the current collector 12 is comprised of an aluminum foil or the like when it is a positive electrode and is comprised of a copper foil or the like when it is a negative electrode. The electrode active material layer 14 can be formed by applying an electrode mixture material to the surface of the current collector 12 by a known coating apparatus and drying and rolling the material. The electrode mixture material is obtained by kneading materials including an electrode active material, a binder, a conductive material, etc. in a dispersion medium and uniformly dispersing the materials. In the case of a general lithium ion secondary battery, the electrode active material is lithium cobalt oxide, lithium iron phosphate, etc. in the case of a positive electrode and is graphite, etc. in the case of a negative electrode.

The first electrode plate 6 and the second electrode plate 8 have an exposed portion 12a of the current collector 12 at the end of the plate in the width direction A. The width direction A is a direction intersecting the longitudinal direction of the belt. The exposed portion 12a included in the first electrode plate 6 and the exposed portion 12a included in the second electrode plate 8 protrude in mutually opposite directions in the width direction A. The exposed portion 12a is a portion of the current collector 12 that is not coated with the electrode active material layer 14.

As described above, the electrode group 2 has a structure in which the first electrode plate 6 and the second electrode plate 8 are wound. For this reason, the end of the current collector 12 in the width direction A, i.e., a plurality of exposed portions 12a are arranged in the radial direction B of the electrode group 2. In other words, the electrode group 2 has a structure in which the exposed portions 12a are stacked. The electrode group 2 may have a structure in which pieces of the first electrode plate 6 and pieces of the second electrode plate 8 are stacked in a plurality of layers, sandwiching the separator 10.

The electrode group 2 by way of one example has a first joined region 46 and a second joined region 48 in which the plurality of exposed portions 12a arranged in the radial direction B are bent in the radial direction B. The first joined region 46 and the second joined region 48 are at opposite positions in the width direction A. The plurality of exposed portions 12a included in the first joined region 46 are the exposed portions 12a of the current collector 12 provided in the first electrode plate 6. The plurality of exposed portions 12a included in the second joined region 48 are the exposed portions 12a of the current collector 12 provided in the second electrode plate 8.

For example, each exposed portion 12a is bent toward the center of winding C of the electrode group 2, i.e., bent inward in the radial direction B. The center of winding C is, for example, the geometric center of the outline of the electrode group 2 seen in the width direction A, i.e., the geometric center of the shape of the electrode group 2 projected in the width direction A. Further, in the electrode group 2 by way of one example, a plurality of first joined regions 46 and a plurality of second joined regions 48 are respectively arranged at predetermined intervals in the circumferential direction of the electrode group 2. In the embodiment, four first joined regions 46 are arranged at intervals of 90° in the circumferential direction. Further, four second joined regions 48 are arranged at intervals of 90° in the circumferential direction.

The first current collector plate 20 and the second current collector plate 22 are arranged so as to sandwich the electrode group 2 in the width direction A. The first current collector plate 20 is disposed on the side of first joined region 46. The second current collector plate 22 is disposed on the side of the second joined region 48. The thickness of the first current collector plate 20 and the second current collector plate 22, e.g., the average thickness (an average value of the thickness at 10 arbitrary points) is 0.1 mm or more and 0.8 mm or less, by way of example.

The first current collector plate 20 is made of, for example, aluminum or the like. The plurality of exposed portions 12a bent in the first joined region 46 are placed in surface contact with the first current collector plate 20. By bending each exposed portion 12a, the contact area between each exposed portion 12a and the first current collector plate 20 increases. Laser welding or the like is performed at a position where the first joined region 46 and the first current collector plate 20 overlap. Thereby, the exposed portion 12a of each winding layer and the first current collector plate 20 are joined to each other.

The second current collector plate 22 is made of, for example, nickel-plated iron, etc. The plurality of exposed portions 12a bent in the second joined region 48 are placed in surface contact with the second current collector plate 22. By bending each exposed portion 12a, the contact area between each exposed portion 12a and the second current collector plate 22 increases. Laser welding or the like is performed at a position where the second joined region 48 and the second current collector plate 22 overlap. Thereby, the exposed portion 12a of each winding layer and the second current collector plate 22 are joined to each other.

The electrode group 2 to which the first current collector plate 20 and the second current collector plate 22 are joined is housed in the bottomed cylindrical outer can 4 along with the electrolytic solution. The outer can 4 is made of, for example, copper, nickel, iron, aluminum, an alloy thereof, or the like. The second current collector plate 22 is joined to the inner bottom surface of the outer can 4 by welding or the like. The first current collector plate 20 is joined to a sealing plate 26 made of the same metal as the outer can 4 by welding or the like. The sealing plate 26 is fitted into the opening of the outer can 4 via an insulating gasket 24. Thereby, the electrode group 2 and the electrolytic solution are sealed in the outer can 4.

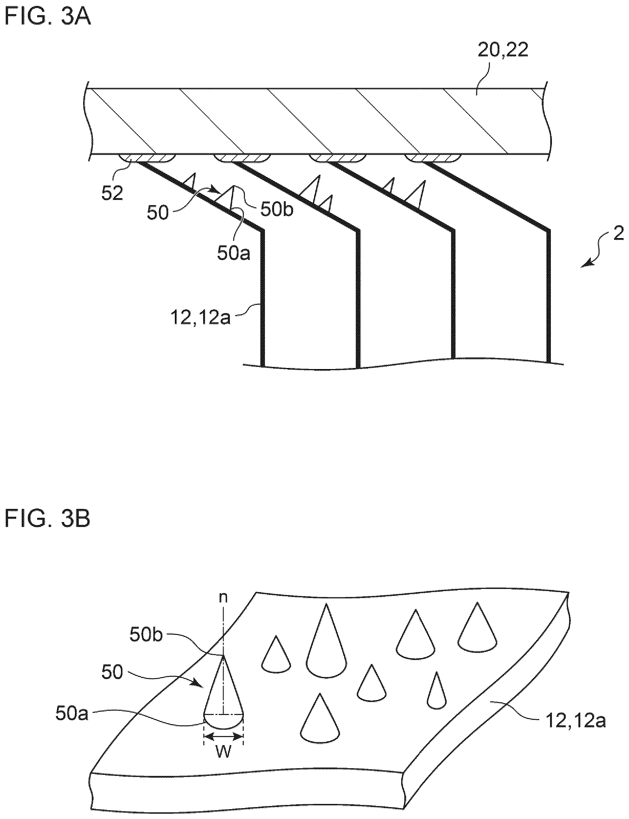

A description will now be given of a structure of the end of the current collector 12. Fig. 3A is a side view of the end of the current collector 12 and the current collector plate. Fig. 3B is a perspective view of the end of the current collector 12. At least some of the exposed portions 12a have a metal foreign matter 50 adhering to the surface. In particular, the exposed portion 12a has the metal foreign matter 50 in an area facing the side of a joined portion 52 between the adjacent exposed portion 12a and the current collector plate. The metal foreign matter 50 by way of example is derived from a molten material from at least one of the current collector 12 or the current collector plate generated in the process of joining the exposed portion 12a and the current collector plate. Therefore, the metal foreign matter 50 includes at least one of the metal constituting the current collector 12 or the metal constituting the current collector plate. By way of example, the metal foreign matter 50 adhering to the exposed portion 12a on the side of the first electrode plate 6 is composed of at least one of aluminum or an alloy thereof. The metal foreign matter 50 adhering to the exposed portion 12a on the side of the second electrode plate 8 is composed of at least one of iron, nickel, copper, or an alloy thereof.

The metal foreign matter 50 has the maximum width W in a bottom portion 50a in contact with the exposed portion 12a, and the width W of a tip portion 50b is smaller than the width W of the bottom portion 50a. The width W of the metal foreign matter 50 in the embodiment is the dimension of the metal foreign matter 50 in the direction perpendicular to the normal n of the surface of the exposed portion 12a as seen from the direction intersecting the normal n. The width W of the metal foreign matter 50 can be identified on a scanning electron microscope (SEM) image obtained by, for example, imaging the metal foreign matter 50 from the direction intersecting the normal n.

Preferably, the metal foreign matter 50 is conical. That is, the metal foreign matter 50 preferably has a shape in which the area of the cross section perpendicular to the normal N gradually increases as it approaches from the tip portion 50b located on the side of the current collector plate toward the bottom portion 50a located on the side of the exposed portion 12a. Further, the metal foreign matter 50 can be a shape in which portions (e.g., the tips) of a plurality of cones are joined together. Further, the metal foreign matter 50 may have a truncated cone shape, which is inclusive of a circular truncated cone and a truncated pyramid.

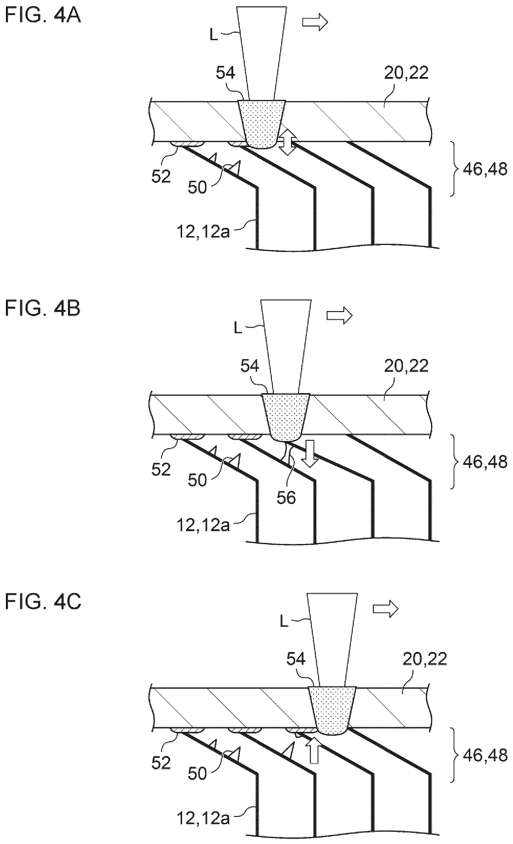

A description will now be given of a method of manufacturing the power storage apparatus 1. Figs. 4A-4C show the steps of joining the current collector 12 and the current collector plate. First, as shown in Fig. 2A, the first electrode plate 6, the second electrode plate 8, and the separators 10, which are belt-like, are prepared. Then, the separator 10, the first electrode plate 6, the separator 10, and the second electrode plate 8 are stacked in this order. The stacked product thus obtained is wound in a spiral shape to form the winding electrode group 2.

Then, the electrode group 2 is set in a processing machine (not shown). Further, the end of the current collector 12 provided in the first electrode plate 6 is bent by the processing machine in the radial direction B. This forms the first joined region 46 including the plurality of exposed portions 12a bent in the radial direction B. After that, the first current collector plate 20 is pressed against the first joined region 46. The plurality of exposed portions 12a arranged in the first joined region 46 and the first current collector plate 20 are joined to each other by heat conduction welding. "Heat conduction welding" in the embodiment is a scheme of joining the exposed portion 12a and the first current collector plate 20 by causing a laser beam having a relatively low power density to be absorbed on the surface of the current collector plate to convert the laser beam into heat, transferring this heat to the current collector 12 to melt the current collector 12, and forming a molten portion 54 by the molten material from the current collector plate and the molten material from the current collector 12. The method for reducing the power density of the laser beam is not particularly limited, and a known method can be employed. For example, the density may be reduced by defocusing the laser beam, the density may be reduced by increasing the spot diameter of the laser beam at focus, or the density may be reduced by reducing the output of the laser beam at focus.

Specifically, as shown in Fig. 4A, the position where the first joined region 46 and the first current collector plate 20 overlap is irradiated with and scanned by the laser beam L from the side of the first current collector plate 20. In heat conduction welding, the laser beam L having a lower power density than that of known keyhole welding is radiated. For example, the power density of the laser beam L is about 10⁷ W/cm² or less. Also, the output of the laser beam L is 600W-1200W, and the scanning speed is 100 mm/s-300 mm/s. The output of the laser beam L is appropriately adjusted according to the thickness of the current collector plate, the composition of the current collector plate and the current collector 12, the scanning speed of the laser beam L, etc.

The molten portion 54 (molten pool) is formed by irradiation with the laser beam L. The molten portion 54 is substantially composed only of the molten material from the first current collector plate 20 at a position where the current collector 12 is not present and is composed of the molten material from the first current collector plate 20 and the molten material from the current collector 12 at a position where the current collector 12 is present.

The molten portion 54 expands with heat. Further, in the region irradiated with the laser beam L so far, the molten portion 54 is cooled and shrinked. For this reason, pulsation can occur in the first current collector plate 20. Further, the expansion of the molten portion 54 presses the exposed portion 12a in contact with the molten portion 54. The exposed portion 12a thus pressed approaches the adjacent exposed portion 12a. When the molten material drips from the molten portion 54 in this state due to the pulsation of the first current collector plate 20, etc., a bridge 56 of the molten material can be formed as shown in Fig. 4B between the two exposed portions 12a that are close to each other.

Then, when the irradiation position of the laser beam L is moved and the molten portion 54 is cooled, the joined portion 52 between the exposed portion 12a and the first current collector plate 20 is formed as shown in Fig. 4C. Further, the exposed portion 12a that had been pressed by the molten portion 54 is pulled back toward the first current collector plate 20, and the two exposed portions 12a connected by the bridge 56 are separated. As a result, the bridge 56 is cut off, and a portion of the molten material remains as the metal foreign matter 50 on the surface of the exposed portion 12a distanced from the first current collector plate 20. The metal foreign matter 50 obtained through such a formation process is often conical and is at least shaped to have the maximum width W in the bottom portion 50a, the width W of the tip portion 50b being smaller than the width W of the bottom portion 50a.

When the entirety of the first joined region 46 is scanned by the laser beam L, the first current collector plate 20 is completely joined to the electrode group 2. Subsequently, the end of the current collector 12 provided in the second electrode plate 8 is bent by a processing machine. This forms a second joined region 48 including the plurality of exposed portions 12a bent in the radial direction B. After that, the second current collector plate 22 is pressed against the second joined region 48. The plurality of exposed portions 12a arranged in the second joined region 48 and the second current collector plate 22 are joined by heat conduction welding through a process similar to that of joining the first current collector plate 20 to the electrode group 2. Thereby, the second current collector plate 22 is joined to the electrode group 2, and the metal foreign matter 50 adheres to the surface of the exposed portion 12a.

The electrode group 2 to which the first current collector plate 20 and the second current collector plate 22 are joined is housed in the outer can 4 along with the electrolytic solution. Then, processes like the joint of the second current collector plate 22 to the outer can 4, joint of the first current collector plate 20 to the sealing plate 26, fitting of the sealing plate 26 in the opening of the outer can 4, etc. are performed. Thereby, the power storage apparatus 1 is obtained. Then, the sequence of steps such as the joint of respective parts, housing in the outer can 4, and fitting of the sealing plate 26 can be modified as appropriate. In the case a liquid pouring port is provided in the sealing plate 26, etc., for example, the electrolytic solution may be poured into the outer can 4 after the sealing plate 26 is fitted in the opening of the outer can 4. Alternatively, the first joined region 46 and the second joined region 48 may be formed first, the first current collector plate 20 and the second current collector plate 22 are then pressed against the electrode group 2, and then the first current collector plate 20 and the second current collector plate 22 may be irradiated with the laser beam L.

As described above, the embodiment is configured such that the plurality of exposed portions 12a are joined to the current collector plate, and at least some of the exposed portions 12a have the metal foreign matter 50 on the surface. The metal foreign matter 50 is shaped to have the maximum width W in the bottom portion 50a in contact with the exposed portion 12a, the width W of the tip portion 50b being smaller than the width W of the bottom portion 50a. The method of manufacturing a power storage apparatus 1 according to the embodiment includes: preparing an electrode group 2 having a structure in which a plurality of exposed portions 12a are arranged; bringing the plurality of exposed portions 12a arranged into contact with a current collector plate and joining each exposed portion 12a to the current collector plate by heat conduction welding.

In the conventional method of manufacturing a power storage apparatus, it has been common to join the current collector and the current collector plate by keyhole welding. In keyhole welding, the current collector plate is irradiated with the laser beam L with a high power density. Accordingly, the joining speed is high, and the productivity of the power storage apparatus can be increased. In keyhole welding, however, there is a high possibility that the laser beam L penetrates the current collector plate. When the laser beam L penetrates the current collector plate, the spatter in the form of fine particles of the molten material may be scattered and adhere to the surface of the exposed portion 12a. The spatter adhering to the exposed portion 12a corresponds to the metal foreign matter. In the case the thickness of the current collector plate is as thin as 0.1 mm or more and 0.8 mm or less as in the embodiment, in particular, the laser beam L is likely to penetrate the current collector plate to scatter the spatter if keyhole welding is performed. Further, even if the laser beam L does not penetrate the current collector plate, a keyhole is likely to be formed as far as the vicinity of the surface of the current collector plate opposing the electrode group 2. In this case, the thickness of the molten metal between the opposing surface and the keyhole can be extremely small. Also, the temperature of the molten metal is much higher than the melting point of the molten metal. As a result, the spatter can be scattered from the opposing surface of the current collector plate.

The spatter adhering to the exposed portion 12a is substantially spherical. Further, the spatter is immediately cooled and solidified when it comes into contact with the surface of the exposed portion 12a. For this reason, the spatter adheres to the surface of the exposed portion 12a with a very small contact area. Therefore, the spatter is easy to peel off from the exposed portion 12a due to the vibration generated during transportation of the power storage apparatus 1, etc., the flow of the electrolytic solution at the time of pouring the solution, etc. The spatter that is peeled off can dissolve in the electrolytic solution and enter the electrode group 2. The metal can precipitate on the electrode plate. If the precipitated metal penetrates the separator 10, a short circuit may occur.

In the embodiment, on the other hand, the exposed portion 12a and the current collector plate are joined by heat conduction welding. In thermal conduction welding, the power density of the laser beam L is lower than that of keyhole welding. For this reason, the flow of the molten material is rectified, and the state of the molten portion 54 is easily stabilized. Therefore, there is a lower risk that the laser beam L penetrates the current collector plate as compared to keyhole welding. Further, there is a low possibility that the thickness of the molten portion 54 becomes extremely small in the vicinity of the opposing surface of the current collector plate. Accordingly, heat conduction welding suppresses the creation of the spatter. Further, in thermal conduction welding, the metal foreign matter 50 caused by the bridge 56 can adhere to the surface of the exposed portion 12a. Therefore, the metal foreign matter 50 shaped to have the maximum width W in the bottom portion 50a can be formed on the surface of the exposed portion 12a.

The metal foreign matter 50 having such a shape tends to have a larger contact area with the exposed portion 12a than a substantially spherical spatter. Further, the center of gravity tends to be closer to the exposed portion 12a than that of the spatter. In addition, the resistance to the flow of the electrolytic solution tends to be smaller than that of the spatter. Accordingly, the metal foreign matter 50 is difficult to peel off from the exposed portion 12a. Therefore, the occurrence of a short circuit caused by the metal foreign matter 50 can be suppressed, and the quality of the power storage apparatus 1 can be improved.

That the spatter or the metal foreign matter 50 adheres to the exposed portion 12a as the exposed portion 12a and the current collector plate are joined, that the metal foreign matter 50 can be peeled off from the exposed portion 12a during manufacturing or use of the power storage apparatus 1, that the spatter is more easily peeled off from the exposed portion 12a than the metal foreign matter 50, and that a short circuit can occur due to the spatter or the metal foreign matter 50 that is peeled off are phenomena identified by the inventors as a result of intensive study and shall not be understood as a general knowledge of those skilled in the art. Since those skilled in the art are not aware of these phenomena, it is common in the art for skilled persons to employ keyhole welding, giving priority to increasing the productivity of the power storage apparatus 1.

In the embodiment, thermal conduction welding is employed in both the joint of the current collector 12 to the first current collector plate 20 and the joint of the current collector 12 to the second current collector plate 22. Alternatively, thermal conduction heating may be employed only in one of the joints. Meanwhile, keyhole welding creates the spatter more likely in the case of joining the current collector 12 composed of a copper foil to the second current collector plate 22 composed of nickel-plated iron than in the case the joining the current collector 12 composed of an aluminum foil to the first current collector plate 20 composed of aluminum. Therefore, the quality of the power storage apparatus 1 can be improved more effectively by employing heat conduction welding when joining the current collector plate containing iron to the current collector 12 containing copper. "Containing iron" in the embodiment means that 50% by mass or more, preferably 70% by mass or more, and more preferably 90% by mass or more, of iron is contained with respect to the total mass of the current collector plate. Further, "containing copper" in the embodiment means that 50% by mass or more, preferably 70% by mass or more, and more preferably 90% by mass or more, of copper is contained with respect to the total mass of the current collector 12.

Further, the laser beam L is likely to penetrate the current collector plate to create the spatter when the thickness of the current collector plate is 0.1 mm or more and 0.8 mm or less. Therefore, the quality of the power storage apparatus 1 can be more effectively improved by employing heat conduction welding when the thickness of the current collector plate is in the above range.

The embodiment of the present disclosure has been described above in detail. The embodiment described above is merely a specific example of practicing the present disclosure. The details of the embodiments shall not be construed as limiting the technical scope of the present disclosure. A number of design modifications such as modification, addition, deletion, etc. of constituting elements may be made to the extent that they do not depart from the idea of the invention defined by the claims. New embodiments with design modifications will provide the combined advantages of the embodiment and the variation. Although the details subject to such design modification are emphasized in the embodiment by using phrases such as "of the embodiment" and "in the embodiment", details not referred to as such are also subject to design modification. Any combination of constituting elements included in the respective embodiments is also useful as an embodiment of the present disclosure. Hatching in the cross section in the drawings should not be construed as limiting the material of the hatched object.

The embodiment may be defined by the following items.

### [Item 1]

A power storage apparatus (1) including:
an electrode group (2) including a current collector (12) in which an electrode active material layer (14) is stacked; and
a current collector plate (20, 22) joined to the current collector (12),
wherein the electrode group (2) has a structure in which a plurality of exposed portions (12a) of the current collector (12) that are not coated with the electrode active material layer (14) are arranged, and the plurality of exposed portions (12a) arranged are joined to the current collector plate (20, 22),
wherein at least some of the exposed portions (12a) have a metal foreign matter (50) adhering to a surface, and
wherein the metal foreign matter (50) has the maximum width in a bottom portion (50a) in contact with the exposed portion (12a), and a width (W) of a tip portion (50b) is smaller than a width (W) of the bottom portion (50a).

### [Item 2]

The power storage apparatus (1) according to Item 1,
wherein the metal foreign matter (50) is conical.

### [Item 3]

The power storage apparatus (1) according to Item 1 or Item 2,
wherein a thickness of the current collector plate (20, 22) is 0.1 mm or more and 0.8 mm or less.

### [Item 4]

The power storage apparatus (1) according to any one of Item 1 through Item 3,
wherein the current collector plate (20, 22) contains iron, and
wherein the current collector (12) contains copper.

### [Item 5]

A method of manufacturing a power storage apparatus (1) including:
preparing an electrode group (2) including a current collector (12) in which an electrode active material layer (14) is stacked, the electrode group (2) having a structure in which a plurality of exposed portions (12a) of the current collector (12) that are not coated with the electrode active material layer (14) are arranged;
bringing the plurality of exposed portions (12a) arranged into contact with a current collector plate (20, 22); and
joining each exposed portion (12a) to the current collector plate (20, 22) by heat conduction welding.

### [Item 6]

The method of manufacturing a power storage apparatus (1) according to Item 5,
wherein a thickness of the current collector plate (20, 22) is 0.1 mm or more and 0.8 mm or less.

### [Item 7]

The method of manufacturing a power storage apparatus (1) according to Item 5 or Item 6,
wherein the current collector plate (20, 22) contains iron, and
wherein the current collector (12) contains copper.

### INDUSTRIAL APPLICABILITY

The present disclosure is applicable to a power storage apparatus and a method of manufacturing a power storage apparatus.

### REFERENCE SIGNS LIST

1 power storage apparatus, 2 electrode group, 12 current collector, 12a exposed portion, 14 electrode active material layer, 20 first current collector plate, 22 second current collector plate, 50 metal foreign matter, 50a bottom portion, 50b tip portion

## Claims

1. A power storage apparatus comprising:
an electrode group including a current collector in which an electrode active material layer is stacked; and
a current collector plate joined to the current collector,
wherein the electrode group has a structure in which a plurality of exposed portions of the current collector that are not coated with the electrode active material layer are arranged, and the plurality of exposed portions arranged are joined to the current collector plate,
wherein at least some of the exposed portions have a metal foreign matter adhering to a surface, and
wherein the metal foreign matter has the maximum width in a bottom portion in contact with the exposed portion, and a width of a tip portion is smaller than a width of the bottom portion.

2. The power storage apparatus according to Claim 1,
wherein the metal foreign matter is conical.

3. The power storage apparatus according to Claim 1 or 2,
wherein a thickness of the current collector plate is 0.1 mm or more and 0.8 mm or less.

4. The power storage apparatus according to Claim 1 or 2,
wherein the current collector plate contains iron, and
wherein the current collector contains copper.

5. A method of manufacturing a power storage apparatus comprising:
preparing an electrode group including a current collector in which an electrode active material layer is stacked, the electrode group having a structure in which a plurality of exposed portions of the current collector that are not coated with the electrode active material layer are arranged;
bringing the plurality of exposed portions arranged into contact with a current collector plate; and
joining each exposed portion to the current collector plate by heat conduction welding.

6. The method of manufacturing a power storage apparatus according to Claim 5,
wherein a thickness of the current collector plate is 0.1 mm or more and 0.8 mm or less.

7. The method of manufacturing a power storage apparatus according to Claim 5 or 6,
wherein the current collector plate contains iron, and
wherein the current collector contains copper.
